Europäisches Patentamt

European Patent Office

Office européen des brevets

(11) Numéro de publication : **0 286 529 B1**

## (12) FASCICULE DE BREVET EUROPEEN

(45) Date de publication du fascicule du brevet :
01.07.92 Bulletin 92/27

(51) Int. Cl.⁵ : **G01M 11/00,** G02F 1/13

(21) Numéro de dépôt : **88400815.2**

(22) Date de dépôt : **05.04.88**

(54) **Dispositif pour déterminer le contraste d'un écran d'affichage en fonction de la direction d'observation.**

(30) Priorité : **08.04.87 FR 8704944**

(43) Date de publication de la demande :
**12.10.88 Bulletin 88/41**

(45) Mention de la délivrance du brevet :
**01.07.92 Bulletin 92/27**

(84) Etats contractants désignés :
**CH DE GB IT LI NL**

(56) Documents cités :
**REVIEW OF SCIENTIFIC INSTRUMENTS, vol. 47, no. 10, octobre 1976, pages 1258-1260, American Institute of Physics; G.G. BARNA:"Apparatus for optical characterization of displays"**
**PATENT ABSTRACTS OF JAPAN, vol. 7, no. 130 (P-202)[1275], 7 juin 1983; & JP-A-58 47 226 (CANON K.K.) 18-03-1983**

(56) Documents cités :
**PATENT ABSTRACTS OF JAPAN, vol. 7, no. 278 (P-242)[1423], 10 décembre 1983; & JP-A-58 155 328 (DAINI SEIKOSHA K.K.)16-09-1983**
**PATENT ABSTRACTS OF JAPAN, vol. 7, no. 23 (P-171)[1168], 29 janvier 1983; & JP-A-57 175 937 (HITACHI SEISAKUSHO K.K.)29-10-1982**
**PATENT ABSTRACTS OF JAPAN, vol. 5, no. 191 (P-92)[863], 5 décembre 1981; & JP-A-56 117 106 (DAINIPPON INSATSU K.K.)14-09-1981**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Deutsch, Jean-Claude 52, rue Thiers F-38000 Grenoble (FR)**

(74) Mandataire : **Mongrédien, André et al c/o BREVATOME 25, rue de Ponthieu F-75008 Paris (FR)**

EP 0 286 529 B1

Jouve, 18, rue Saint-Denis, 75001 PARIS

**Description**

La présente invention a pour objet un dispositif servant à déterminer le contraste d'un écran d'affichage en vue notamment de tracer les courbes d'isocontraste, c'est-à-dire les courbes de même contraste, de l'écran d'affichage suivant la direction d'observation de l'écran.

L'écran d'affichage peut être un écran à caractères alpha-numériques ou un écran matriciel utilisant comme matériau d'affichage un film de cristal liquide, un matériau électroluminescent, un matériau électrochromique, un gaz ionisable. Toutefois, l'invention s'applique plus particulièrement aux écrans d'affichage à cristaux liquides.

La réalisation d'images complexes à l'aide d'écrans d'affichage matriciels requiert des exigences de qualité sévères quant à la visibilité. Parmi les principaux facteurs qui influent sur la visibilité, le contraste, fonction de la direction d'observation de l'écran, est l'un des plus importants.

En particulier, dans le cas d'écrans plats à cristal liquide, et ce, quels que soient leurs modes de fonctionnement et la nature du cristal liquide, le contraste varie rapidement en fonction de la direction d'observation de l'écran du fait que les phénomènes physiques mis en jeu pour la création d'une image sont liés à l'anisotropie optique des molécules du cristal liquide contenu dans l'écran.

Par ailleurs, le contraste varie en fonction du cristal liquide utilisé, de l'épaisseur du film de cristal liquide, du mode d'éclairage de l'écran d'affichage ainsi que de la nature des polariseurs, lorsque ces derniers sont nécessaires à l'affichage.

Le contraste d'un écran d'affichage selon sa direction d'observation et en particulier les courbes d'isocontraste de cet écran reflètent les qualités optiques de l'écran. Ceci permet pour les constructeurs d'écrans d'affichage de tester leurs écrans à différents stades de leur fabrication afin de modifier tel ou tel élément de l'écran influant sur le contraste en vue d'améliorer ses qualités optiques. Ceci permet aussi pour les fabricants de systèmes complexes utilisant des écrans d'affichage (Minitel, micro-ordinateurs, machines à traitement de texte, etc.) de choisir sur le marché l'écran le plus performant.

Le contraste C d'un écran d'affichage est déterminé en mesurant le rapport de la luminance d'une surface élémentaire d'affichage à l'état affiché, notée $L_B$, ou point blanc, sur la luminance de ce même point à l'état non affiché ou point noir, notée $L_N$, soit $C=L_B/L_N$. Ce contraste, variant suivant la direction d'observation de la surface élémentaire d'affichage, un certain nombre de systèmes relativement complexes ont été mis au point jusqu'à ce jour pour déterminer ce contraste suivant la direction d'observation de l'écran voir par exemple l'article de G.G.BARNA: "Apparatus for optical characterization of displays" paru dans Rewiew of Scientific Instruments. Vol.47, n°10, octobre 1976, pages 1258-1260.

La mesure du contraste de l'écran est généralement assurée à l'aide d'un photomètre éventuellement couplé à une électronique de traitement.

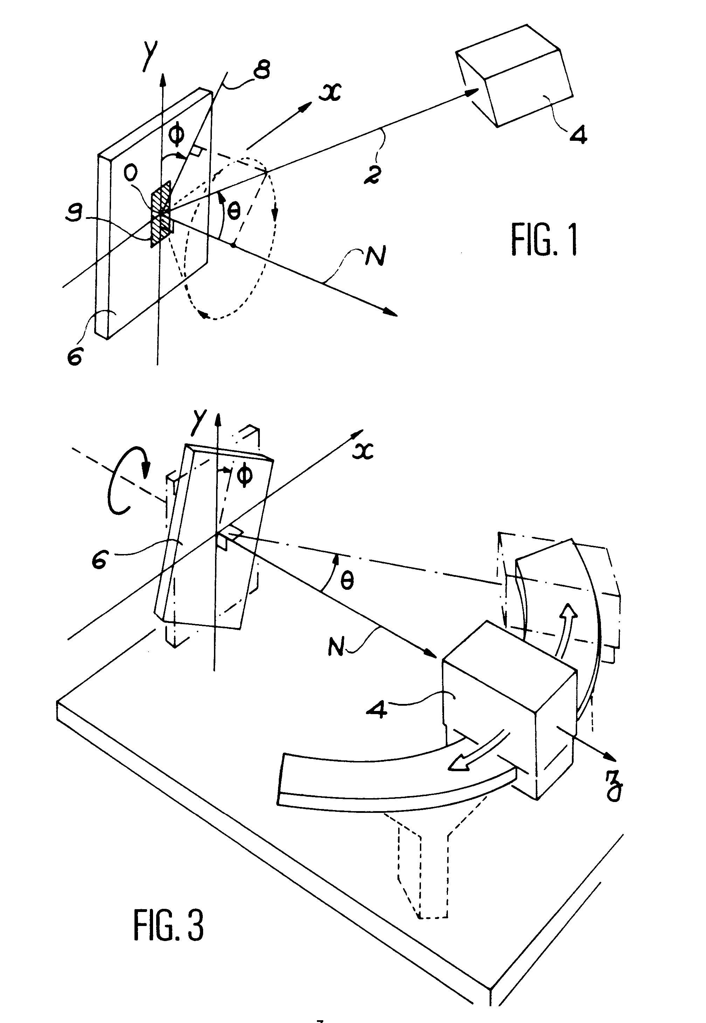

Sur la figure 1, on a représenté schématiquement le principe de la mesure du contraste d'un écran d'affichage en fonction de la direction d'observation de cet écran.

L'orientation de l'axe optique 2 du photomètre 4 par rapport à l'écran d'affichage 6 représente la direction d'observation par un observateur de cet écran. Elle est définie à l'aide de deux angles $\theta$ et $\Phi$. L'angle $\theta$ est l'angle que forme l'axe optique 2 du photomètre 4 avec la normale N à la surface de l'écran 6 à tester, et plus précisément avec la normale N à la surface d'un point d'affichage élémentaire 9 de cet écran. L'angle $\Phi$ est l'angle défini entre la projection 8 de l'axe optique 2 dans le plan de l'écran 6 par rapport à une droite de référence y, contenue dans le plan de l'écran.

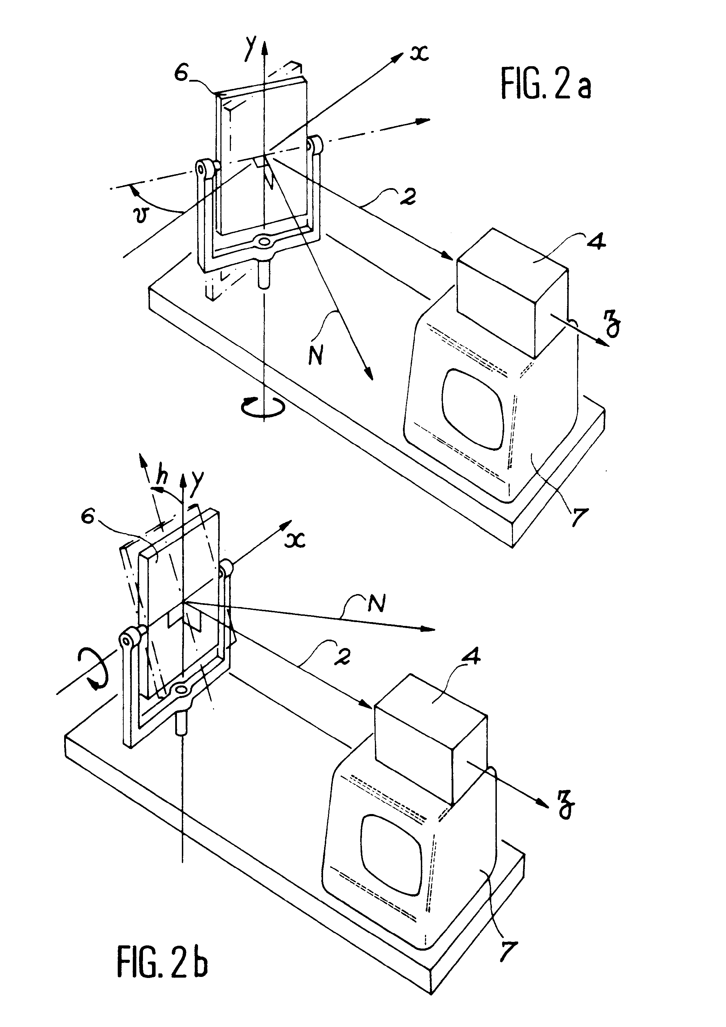

La détermination du contraste en fonction des valeurs de $\theta$ et de $\Phi$ peut se faire en utilisant un écran 6 mobile autour de deux axes de rotation perpendiculaires entre eux et à l'axe optique 2 et un photomètre 4 fixe (ou inversement un écran fixe et un photomètre mobile). Cette méthode de détermination du contraste est schématisée sur la figure 2.

Dans ce cas, les angles de vue $\theta$ et $\Phi$ sont définis par les angles d'Euler, par rapport à un repère fixe xyz orthonormé dont l'axe z est confondu avec l'axe optique 2 du photomètre. L'angle noté v définit l'angle de rotation de l'écran 6 par rapport à la direction x du repère, comme le montre la figure 2a, et h l'angle de rotation par rapport à la direction y de ce même repère, comme le montre la figure 2b.

Les relations simples sin v = - sin $\theta$.cos $\Phi$ et cos h=cos $\theta$/cos v permettent de déterminer $\theta$ et $\Phi$, connaissant v et h, à l'aide d'un micro-ordinateur 7 couplé au photodétecteur 4.

L'utilisation des angles d'Euler a notamment fait l'objet d'une publication de J.C. DEUTSCH parue dans Visu 86, journées nationales d'études, Toulon, du 27 au 30 octobre, "Système de mesure automatique pour la caractérisation d'écrans à cristaux liquides".

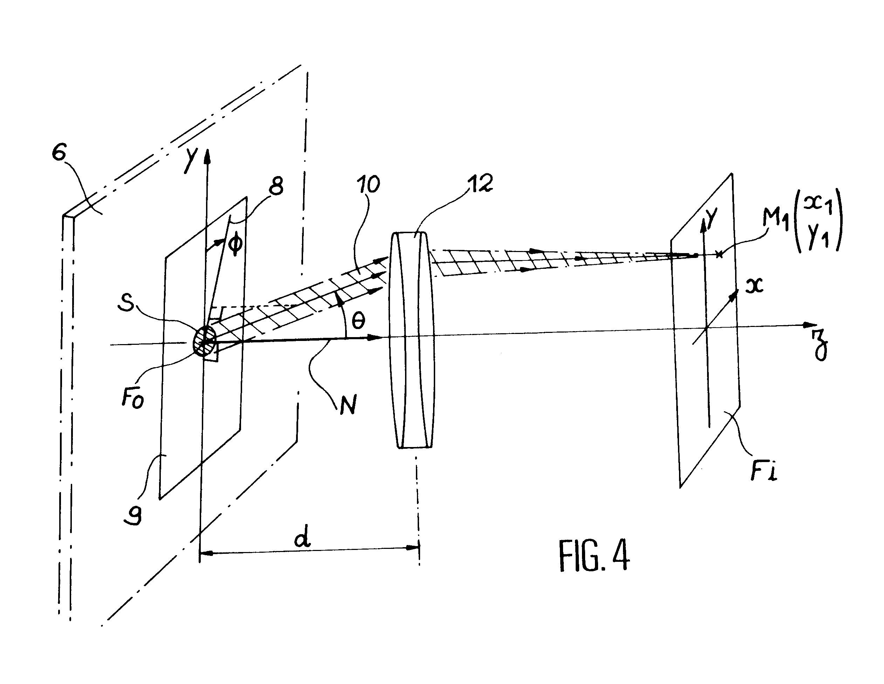

Dans une autre solution, telle que représentée sur la figure 3, l'écran à étudier 6 est mobile autour de l'axe z et le photomètre 4 est mobile dans un plan perpendiculaire à l'écran et contenant l'axe x ; l'angle $\Phi$ est alors défini par la rotation de l'écran 6 et est mesuré par rapport à l'axe y par exemple et l'angle $\theta$ est défini par le déplacement du photomètre 4 et est égal à l'angle compris entre la normale N à la surface élémentaire d'affichage 9 et l'axe optique 2 du photomètre.

Ces différentes solutions présentent un certain nombre d'inconvénients. En effet, les deux axes de rotation de l'écran (figures 2a, 2b) ou respectivement de l'écran ou du photomètre (figure 3) ainsi que l'axe optique ou l'axe z du repère xyz doivent être parfaitement concourants au point 0 notamment situé au centre d'une surface élémentaire d'affichage 9 de l'écran 6. Ceci pose de grosses difficultés quant à la réalisation mécanique du système assurant la rotation de l'écran et/ou du photomètre.

En outre, chaque fois que l'on change d'écran, un réglage long et fastidieux doit être mis en oeuvre pour assurer un bon positionnement de cet écran par rapport à l'axe optique du photomètre ainsi qu'un bon positionnement des systèmes mécaniques assurant les deux rotations. Le positionnement correct d'un écran nécessite au moins deux heures de réglage.

Par ailleurs, la réalisation des courbes d'isocontraste en fonction de la direction d'orientation de l'écran d'affichage à étudier est longue et fastidieuse et nécessite au moins 12 heures de travail.

La présente invention a justement pour objet un dispositif pour déterminer le contraste d'un écran d'affichage en fonction de la direction d'observation permettant de remédier aux différents inconvénients ci-dessus.

En effet, le dispositif de l'invention ne nécessite qu'un réglage simple de l'écran et la durée de mesure est relativement courte ; quelques minutes suffisent pour effectuer le réglage et tracer différentes courbes d'isocontraste de l'écran.

De façon plus précise, l'invention a pour objet un dispositif pour déterminer le contraste entre l'état affiché et l'état non affiché d'une surface élémentaire d'un écran d'affichage en fonction de la direction d'observation de ce point, caractérisé en ce qu'il comprend :

– un premier objectif convergent servant à former l'image transformée de Fourier de la surface élémentaire dans le plan focal image du premier objectif,

– un second objectif convergent servant à projeter l'image de la transformée sur un ensemble de détecteurs disposés sous forme d'une matrice, chaque détecteur produisant un signal électrique proportionnel à l'intensité lumineuse fournie par le surface élémentaire selon une direction déterminée d'observation,

– un diaphragme situé à proximité du second objectif dont l'ouverture définit une surface qui doit être égale à la surface élémentaire,

– des moyens de traitement du signal électrique produit par chaque détecteur afin de déterminer ledit contraste.

La surface élémentaire d'affichage peut être plus petite, égale ou supérieure à un point élémentaire d'affichage ou pixel de l'écran d'affichage.

Le dispositif de l'invention, en plus des avantages donnés ci-dessus, est relativement simple et peu coûteux.

De façon avantageuse, le dispositif comprend des moyens de mémorisation et des moyens de visualisation afin de réaliser et de visualiser les courbes d'isocontraste de l'écran à étudier.

Afin de simplifier le traitement des signaux électriques issus du détecteur matriciel, l'écran à étudier est placé avantageusement dans le plan focal objet du premier objectif.

D'autres caractéristiques et avantages de l'invention ressortiront mieux de la description qui va suivre, donnée à titre illustratif et non limitatif, en référence aux figures annexées, dans lesquelles :

– la figure 1, déjà décrite, illustre le principe de la mesure du contraste d'un écran d'affichage en fonction de la direction d'observation de cet écran,

– les figures 2a et 2b, déjà décrites, illustrent schématiquement une première méthode de mesure du contraste d'un écran d'affichage en fonction de la direction d'observation de cet écran,

– la figure 3, déjà décrite, représente schématiquement une seconde méthode de mesure du contraste d'un écran d'affichage en fonction de la direction d'observation de cet écran,

– la figure 4 illustre le principe physique utilisé dans le dispositif selon l'invention,

– la figure 5 représente schématiquement le dispositif de l'invention, et

– les figures 6 à 8 donnent la cartographie du contraste de trois écrans différents en fonction de la direction d'observation de ces écrans.

La figure 4 représente le principe optique utilisé dans le dispositif selon l'invention. Sur cette figure, on a représenté un écran d'affichage à étudier 6 situé au foyer objet Fo d'un objectif 12. La surface élémentaire d'affichage 9 de l'écran 6 par exemple à l'état affiché diffuse de la lumière dans toutes les directions de l'espace et en particulier sur tout l'objectif 12.

Un faisceau élémentaire de lumière 10 traversant un élément de surface S contenu dans la surface 9 forme par rapport à la normale N de l'écran un angle $\theta$ et sa projection 8 dans le plan de l'écran 6 forme avec la direction y verticale, perpendiculaire à l'axe optique z du dispositif, un angle $\Phi$. Ce faisceau élémentaire, incliné par rapport à l'écran, est un faisceau de lumière parallèle, c'est-à-dire que tous les rayons le constituant sont parallèles entre eux, et toute l'énergie lumineuse de ce faisceau dont la section est égale à S est concentrée en un point $M_1$ de coordonnées $x_1$, $y_1$, situé dans le plan focal image Fi de l'objectif 12.

Il existe donc une relation biunivoque entre la direction angulaire, définie par les angles $\theta$ et $\Phi$, d'un faisceau élémentaire de lumière traversant l'objectif 12 et les coordonnées d'un point M du plan focal image Fi de cet objectif 12.

Pour un écran d'affichage 6 au foyer objet de l'objectif 12, on a les relations géométriques suivantes pour chaque point Mi de coordonnées xi et yi du plan focal image Fi :

$$xi = \sin \theta \cdot \cos \Phi \quad (1)$$
$$yi = \sin \theta \cdot \sin \Phi \quad (2)$$

Conformément à l'invention, il est possible de placer l'écran 6 à étudier en amont du foyer objet Fo de l'objectif 12. Dans ce cas, les relations (1) et (2) entre les coordonnées d'un point Mi du plan focal image de l'objectif 12 et les angles θ et Φ doivent être multipliées par une constante k qui est fonction de la distance d séparant l'écran 6 et l'objectif 12 ainsi que des aberrations optiques qui peuvent intervenir du fait de l'agencement des différents éléments optiques et de la qualité de ces éléments.

Le terme correctif à apporter peut être obtenu en effectuant un étalonnage préalable du système optique, consistant à déterminer la position exacte des différents points Mi du plan focal image Fi en fonction de directions d'observation bien définies, et donc de valeurs θ et de Φ bien connues.

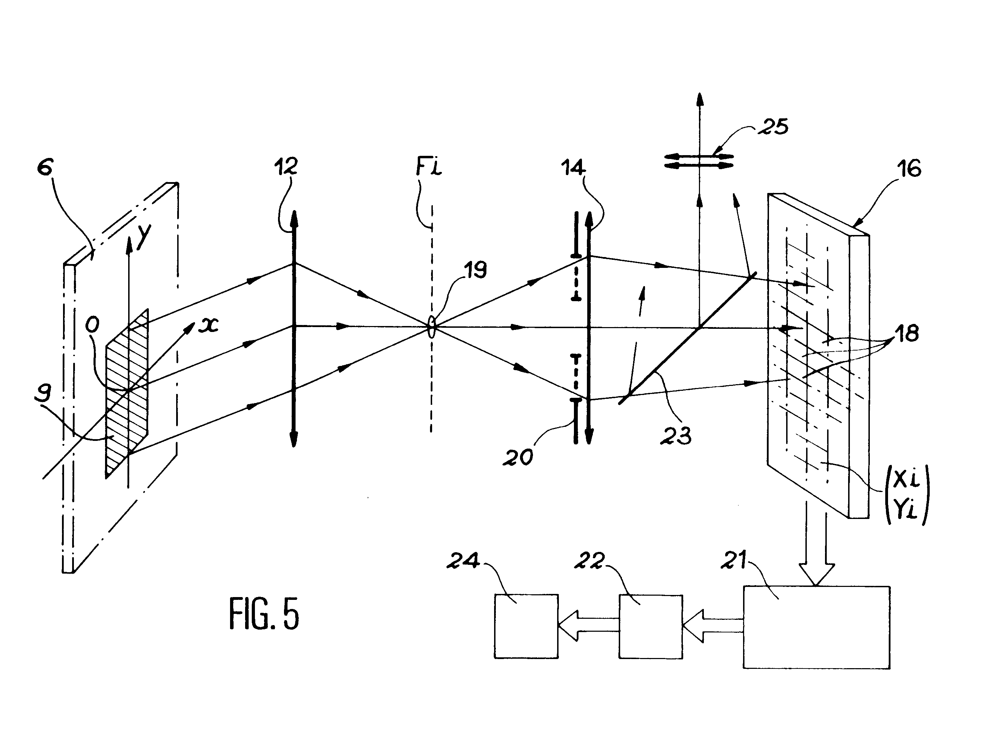

Sur la figure 5, on a représenté le dispositif de l'invention utilisant le principe représenté sur la figure 4. Ce dispositif comporte un premier objectif 12, constitué de plusieurs lentilles convergentes, dont la distance focale varie de 10 à 50 mm, situé en regard de l'écran à étudier 6 ; la distance séparant l'objectif 12 et l'écran 6 est égale à la distance focale objet de l'objectif 12.

L'ensemble de la lumière traversant la surface élémentaire d'affichage 9 de l'écran 6 converge dans le plan focal image Fi de l'objectif 12. L'image 19 de la transformée de Fourier de la surface élémentaire 9 formée en Fi se présente sous la forme d'une tache lumineuse de faible diamètre.

La notion d'image de la transformée de Fourier d'un objet est bien connue de l'homme de l'art. Pour de plus amples détails sur cette transformée, on peut se référer au traité d'Optique Instrumentale, tome II, "Diffraction et structure des images" d'André Maréchal et Maurice Françon, édition de la Revue d'Optique Théorique et Instrumentale, Paris 1960, ou au livre Optics de Born and Wolf.

Cette image 19 est projetée à l'aide d'un second objectif 14, constitué de plusieurs lentilles convergentes, ayant une focale allant de 10 à 50 mm, sur un ensemble 16 de détecteurs 18 répartis sous forme matricielle.

Selon l'invention, le premier objectif 12 sert à former l'image de la surface S sur le second objectif 14 et à former dans son plan focal Fi, l'image Mi d'un point à l'infini, représentant l'orientation d'un faisceau de lumière "parallèle" 10 traversant la surface d'analyse 9 de l'écran 6. Le second objectif 14 projette alors l'image Mi du point à l'infini sur un détecteur 18.

L'ensemble 16 de détecteurs peut être un détecteur photoélectrique matriciel du type dispositif à transfert de charges (CCD), réticon, tube de télévision, etc., bien connu de l'homme de l'art. Chaque détecteur élémentaire 18, qui peut être repéré par des coordonnées Xi, Yi détecte l'intensité lumineuse traversant la surface élémentaire d'affichage 9 selon une direction bien déterminée, c'est-à-dire correspondant à des valeurs bien précises de θ et de Φ.

Afin de mesurer l'énergie lumineuse ne provenant que de la surface élémentaire d'affichage 9 de l'écran, un diaphragme 20 d'ouverture réglable est fixé sur le second objectif 14, soit du côté de l'objectif 12 comme représenté, soit de l'autre côté. L'ouverture du diaphragme 20 sert de diaphragme de champ pour l'écran d'affichage 6, c'est-à-dire que l'ouverture du diaphragme 20 fixe les dimensions de l'élément de surface 9 de l'écran 6 que l'on étudie. Autrement dit, l'ouverture du diaphragme 20 définit une surface qui est égale à la surface élémentaire d'affichage 9.

Actuellement, les points élémentaires d'affichage présentent une surface de l'ordre de 0,3×0,3 mm², et le dispositif de l'invention peut être utilisé pour l'analyse de surface 9 allant de 0,1×0,1 mm² à 1×1 mm².

Le réglage du dispositif de l'invention peut être réalisé par un système annexe comportant un miroir semi-réfléchissant 23, entre l'objectif 14 et l'ensemble 16 des détecteurs renvoyant une partie de la lumière issue de la surface d'affichage 9 en direction d'un système de visée 25 bien connu de l'homme de l'art.

Le signal électrique fourni par chaque détecteur 18 est proportionnel à l'intensité lumineuse de la surface élémentaire d'affichage 9 selon une orientation déterminée ; il est reçu dans une mémoire 21 connectée à un micro-ordinateur 22. Ce dernier transforme chaque signal électrique, fourni par les différents détecteurs élémentaires 18, en luminance et associe cette valeur de luminance à des valeurs bien précises de θ et Φ déterminées par le calculateur 22, grâce au repérage en X et Y des différents détecteurs élémentaires, avec les équations (1) et (2) précédentes.

La mesure de la luminance pour les différentes directions d'observation de la surface d'affichage 9 est réalisée simultanément. Cette luminance est d'abord déterminée lorsque la surface élémentaire d'affichage 9 est à l'état affiché ou point blanc, puis lorsque cette surface élémentaire d'affichage est à l'état non affiché ou point noir. Le rapport de la luminance du point blanc sur la luminance du point noir, correspondant au contraste de l'écran d'affichage, en fonction d'une direction d'observation bien précise définie par les angles θ et Φ, est calculé par le micro-ordinateur 22.

Afin de tenir compte des aberrations optiques du système dans son ensemble, un étalonnage préalable peut être réalisé et mis en mémoire dans le micro-ordinateur afin d'attribuer à chaque détecteur une direction d'observation de la surface d'affichage 9 bien précise.

Afin de tracer les différentes courbes d'isocontraste de la surface d'affichage 9 de l'écran 6, le calculateur 22 peut commander un dispositif de visualisation 24 qui peut être l'écran de visualisation même du micro-ordinateur 22 lorsque celui-ci en comporte un ou bien une table traçante XY.

Le traitement électronique permettant d'associer à chaque détecteur 18, repéré en X et Y, une valeur du contraste de l'écran est simple et à la portée de l'homme de l'art.

Le dispositif de l'invention a permis de tracer les courbes d'isocontraste de différents types d'écrans, l'ensemble des courbes d'isocontraste d'un écran déterminé étant appelé cartographie.

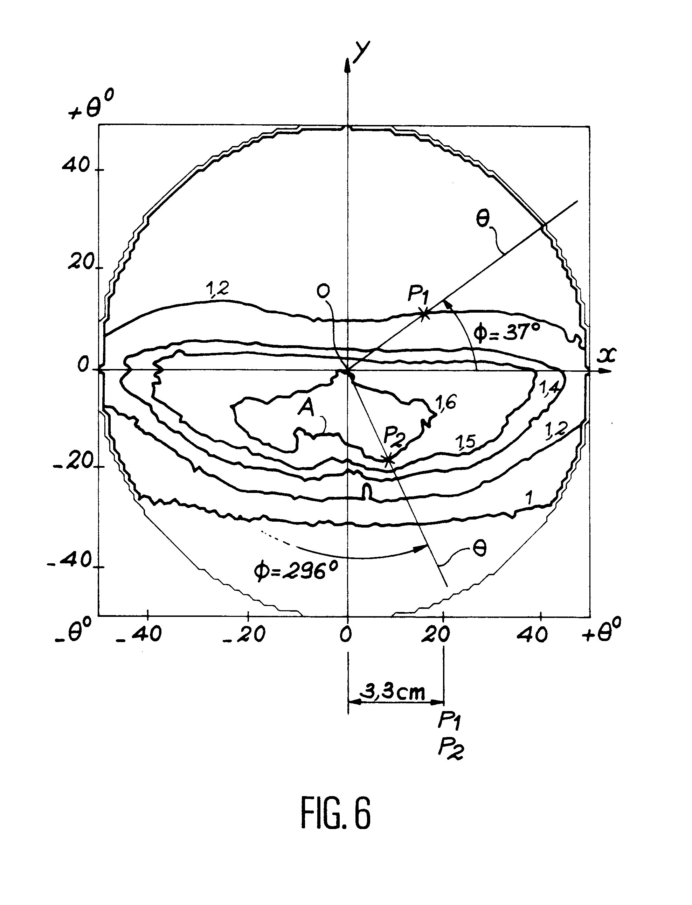

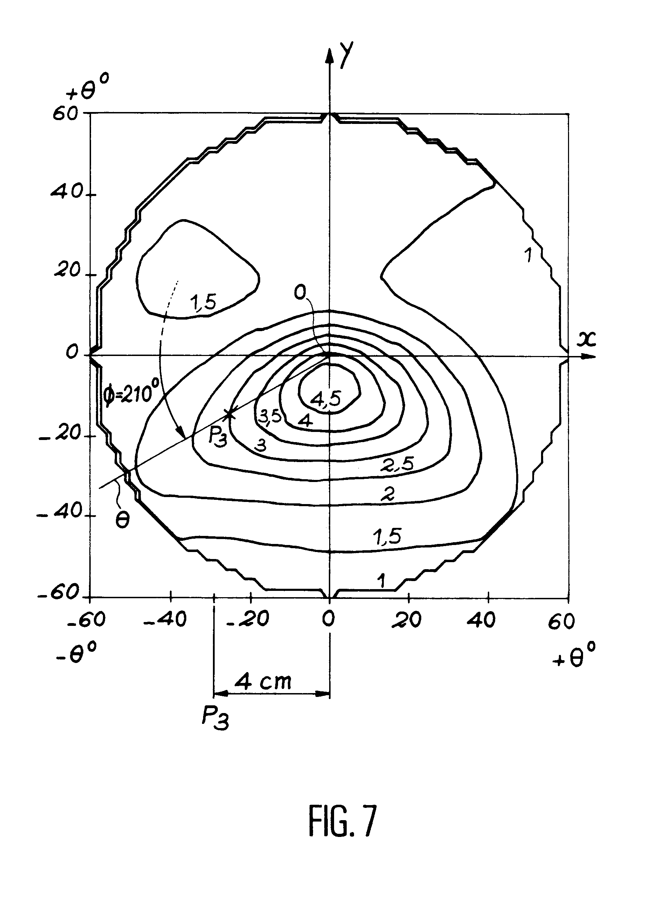

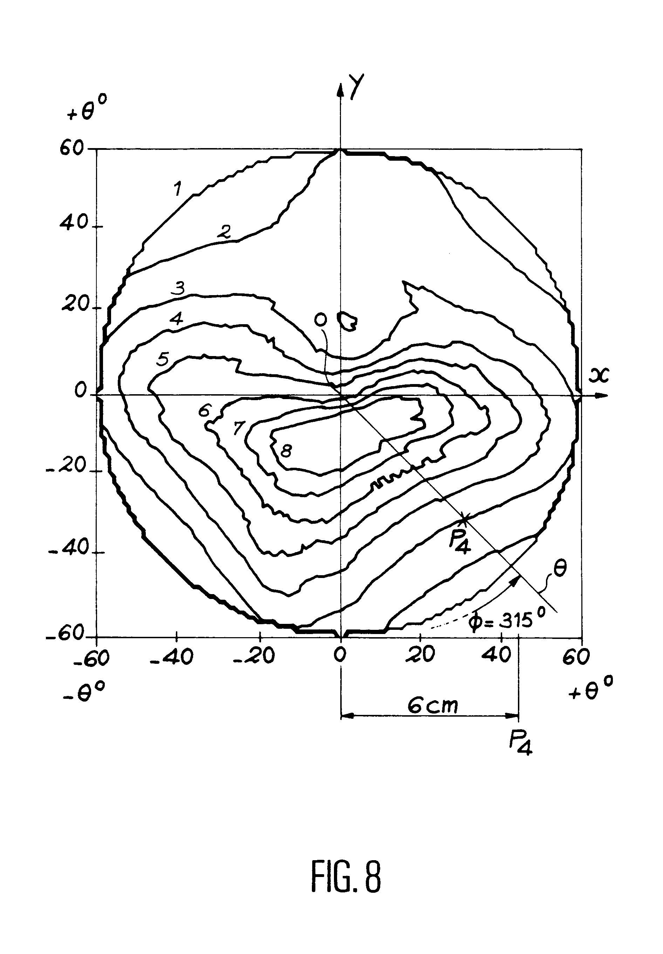

La figure 6 est relative à un écran de mauvaise qualité, la figure 7 est relative à un écran de qualité moyenne et la figure 8 est relative à un écran de bonne qualité. Ces trois cartographies sont réalisées dans le plan xy.

La courbe A représentée sur la figure 6 représente le lieu des points où le contraste est égal à 1,6. Cette courbe est relativement décentrée par rapport à l'origine 0 des axes et la valeur du contraste y est très faible. En effet, on estime qu'un écran de bonne qualité doit présenter un contraste au moins égal à 3 et ce, pour des valeurs de $\theta$ et $\Phi$ les plus grandes possibles. Or, il ressort de la figure 6 que le contraste maximum de cet écran est égal à 1,6 les autres courbes représentant respectivement les courbes d'isocontraste de 1,5, 1,4, 1,2 et 1.

Le contraste de l'écran pour une orientation d'observation donnée, définie par les angles $\theta$ et $\Phi$ se lit comme suit sur les différentes cartographies : par exemple le point $P_1$ situé sur la courbe de contraste 1,2, correspond à une orientation d'observation de l'écran définie par l'angle $\theta$ égal à la distance $\overline{OP_1}$ et par l'angle $\Phi$ que forme la droite passant par le point 0 et le point $P_1$ avec l'axe des abscisses x. Dans le cas présent, $\overline{OP_1}$=3,3 cm, ce qui, rapporté sur l'échelle des abscisses, donne un angle de 20° alors que l'angle $\Phi$ est voisin de 37°, mesuré au rapporteur par exemple.

De même le point $P_2$ placé sur la courbe de contraste 1,6 correspond à une orientation d'observation définie par l'angle $\theta$ égal à la distance $\overline{OP_2}$, c'est-à-dire 3,3 cm, ce qui, ramené sur l'axe des abscisses, donne un angle de 20°, et par l'angle $\Phi$ que forme la droite $OP_2$ avec la direction x et qui est voisin de +296°.

Les angles d'inclinaison $\theta$ sont relativement faibles, ce qui accroît encore la mauvaise qualité de l'écran.

La figure 7 est relative à un écran moyen puisqu'il comprend des courbes d'isocontraste allant de 4,5 à 1,5 et que les courbes d'isocontraste au moins égales à 3 correspondent à des angles $\theta$ et $\Phi$ moyens.

Par exemple, le point $P_3$ sur la courbe d'isocontraste 3 correspond à un angle $\theta$, défini par la distance $\overline{OP_3}$ soit 4 cm environ, ce qui ramené sur les ordonnées donne un angle $\theta$ égal à -29°, et à un angle $\Phi$ défini entre la droite, passant par le point 0 et le point $P_3$, et l'axe des x est égal à 210°.

La figure 8 représente la cartographie du contraste d'un écran de bonne qualité en fonction de son angle d'observation. En effet, le point $P_4$, situé sur la courbe d'isocontraste 3, correspond à un angle $\theta$, défini par la distance $\overline{OP_4}$ égale à 6 cm soit de 45°, et à un angle $\Phi$, défini entre l'axe x et la droite passant par le point O et le point $P_4$, qui est voisin de 315°. En outre, les courbes d'isocontraste au moins égales à 3 sont beaucoup plus grandes que celles représentées sur la figure 7, et beaucoup plus nombreuses ; une courbe d'isocontraste 8 a même pu être tracée.

Les trois cartographies ci-dessus ont été réalisées en moins de 10 minutes chacune, ce qui correspond à un temps très nettement inférieur à celui obtenu avec les dispositifs de l'art antérieur. En outre, le système de l'invention est relativement simple et est entièrement statique contrairement à ceux de l'art antérieur.

## Revendications

1. Dispositif pour déterminer le contraste entre l'état affiché et l'état non affiché d'une surface élémentaire (9) d'un écran d'affichage (6) en fonction de la direction d'observation de ce point, caractérisé en ce qu'il comprend :
   - un premier objectif convergent (12) servant à former l'image (19) de la transformée de Fourier de la surface élémentaire (9) dans le plan focal image (Fi) du premier objectif (12),
   - un second objectif convergent (14) servant à projeter l'image (19) de la transformée sur un ensemble (16) de détecteurs (18) disposés sous forme d'une matrice, chaque détecteur (18) produisant un signal électrique proportionnel à l'intensité lumineuse fournie par le surface élémentaire (9) selon une direction déterminée d'observation ($\theta$, $\Phi$),
   - un diaphragme (20) situé à proximité du second objectif (14) dont l'ouverture définit une surface qui doit être égale à la surface élémentaire,
   - des moyens de traitement (22) du signal électrique produit par chaque détecteur (18) afin de déterminer ledit contraste.

2. Dispositif selon la revendication 1, caractérisé en ce qu'il comprend des moyens de mémorisation (21) et des moyens de visualisation (24) afin de réaliser et de visualiser les courbes d'isocontraste de la surface élémentaire (9).

3. Dispositif selon la revendication 1 ou 2, caractérisé en ce que le premier objectif (12) et l'écran d'affichage (6) sont séparés l'un de l'autre par une distance égale à la distance focale objet du premier objectif (12).

## Patentansprüche

1. Vorrichtung zum Bestimmen des Kontrasts zwischen einem angezeigten Zustand und einem nicht angezeigten Zustand einer Elementarfläche (9) eines Anzeigeschirms (6) in Abhängigkeit von der Beobachtungsrichtung auf diesen Punkt, dadurch gekennzeichnet, daß sie umfaßt:

– ein erstes Konvergenzobjektiv (12), das dazu dient, das Bild (19) der Fourier-transformierten der elementaren Oberfläche (9) in der Bildfokusebene (Fi) des ersten Objektivs (12) zu bilden,

– ein zweites Konvergenzobjektiv (14), das dazu dient, das Bild (19) der Transformierten auf eine Anordnung (16) von Detektoren (18) zu projizieren, die in der Form einer Matrix angeordnet sind, wobei jeder Detektor (18) ein elektrisches Signal proportional zur Leuchtintensität, die von der elementaren Oberfläche (9) entlang einer vorgegebenen Beobachtungsrichtung ($\theta$, $\Phi$) erzeugt wird, erzeugt,

– eine Blende (20), die sich in der Nähe des zweiten Objektivs (14) befindet und deren Öffnung eine Oberfläche bildet, die gleich der elementaren Oberfläche sein muß,

– Vorrichtungen (22) zur Verarbeitung des von jedem Detektor (18) erzeugten, elektrischen Signals, um den Kontrast zu bestimmen.

2. Vorrichtung nach Anspruch 1, dadurch gekennzeichnet, daß sie Speichervorrichtungen (21) und Vorrichtungen (24) zum Sichtbarmachen umfaßt, um Kurven gleichen Kontrasts der elementaren Fläche (9) zu erzeugen und sichtbar zu machen.

3. Vorrichtung nach Anspruch 1 oder 2, dadurch gekennzeichnet, daß das erste Objektiv (12) und der Anzeigeschirm (9) voneinander durch einen Abstand gleich dem Objektfokusabstand von dem ersten Objektiv ist.

## Claims

1. Device for determining the contrast between the displayed state and the undisplayed state of an elementary surface (9) of a display screen (6) as a function of the observation direction of said point, characterized in that it comprises:

– a first convergent objective (12) used for forming the Fourier transform image (19) of the elementary surface (9) in the focal image plane of the first objective (12),

– a second convergent objective (14) for projecting the image (19) of the transform on to an array (16) of detectors (18) arranged in matrix form, each detector (18) producing an electric signal proportional to the light intensity supplied by the elementary surface (9) in a given observation direction ($\theta$, $\Phi$),

– a diaphragm (20) located in the vicinity of the second objective (14), whose aperture defines a surface which must be equal to the elementary surface and

– means for processing (22) the electric signal produced by each detector (18) in order to determine said contrast.

2. Device according to claim 1, characterized in that it comprises storage means (21) and display means (24), in order to produce and display isocontrast curves of the elementary surface (9).

3. Device according to claim 1, characterized in that the first objective (12) and display sceen (6) are separated from one another by a distance equal to the object focal distance of the first objective (12).

FIG. 1

FIG. 3

FIG. 2 a

FIG. 2 b

FIG. 4

FIG. 5

EP 0 286 529 B1

FIG. 6

FIG. 7

FIG. 8